Europäisches Patentamt

European Patent Office

Office européen des brevets

(11) Numéro de publication: **0 069 610**
**A1**

(12) ## DEMANDE DE BREVET EUROPEEN

(21) Numéro de dépôt: **82401048.2**

(22) Date de dépôt: **09.06.82**

(51) Int. Cl.³: **B 62 K 27/00**

(30) Priorité: **09.06.81 FR 8111303**

(43) Date de publication de la demande:
**12.01.83 Bulletin 83/2**

(84) Etats contractants désignés:
**AT BE CH DE FR GB IT LI LU NL SE**

(71) Demandeur: **BS PLASTIC Société à Responsabilité Limitée:**
**Zone Artisanale**
**F-21540 Sombernon(FR)**

(72) Inventeur: **Busseuil, Jacques**
**Velars sur Ouche**
**F-21370 Plombieres(FR)**

(74) Mandataire: **Bruder, Michel**
**10 rue de la Pépinière**
**F-75008 Paris(FR)**

(54) **Dispositif d'accouplement pour relier deux cycles en tandem au moyen d'une barre d'accouplement.**

(57) Le dispositif à barre d'accouplement (3) est réalisé en une matière élastique lui permettant d'être déformée en flexion et son extrémité avant est encastrée fermement à l'arrière du cycle avant (1).

Fig.1

EP 0 069 610 A1

La présente invention concerne un dispositif d'accouplement pour relier deux cycles en tandem au moyen d'une barre d'accouplement.

On a déjà envisagé d'accoupler deux bicyclettes au moyen d'une barre de manière à constituer en quelque sorte un tandem. Certains des dispositifs d'accouplement connus jusqu'à ce jour comportent une barre rigide qui est articulée, à ses deux extrémités, respectivement à l'arrière de la bicyclette avant et à l'avant de la bicyclette arrière.

Tous les dispositifs connus ne se sont pas révélés totalement satisfaisants soit à cause de leur prix de revient relativement élevé, soit encore du fait qu'ils ne permettent pas de rouler dans les meilleures conditions de sécurité et de confort.

Parmi ces dispositifs, celui ayant fait l'objet de la demande de brevet français N° 2 434 746 déposée le 30 Août 1978 prévoyait d'utiliser deux articulations à la cardan aux extrémités de la barre rigide. Un tel dispositif, s'il offrait des améliorations notables par rapport aux dispositifs antérieurs, a présenté, à l'usage, quelques inconvénients. Notamment les articulations à la cardan entraînaient, pendant l'utilisation, des à-coups et des phénomènes d'oscillations périodiques. Par ailleurs, du fait de la prévision des deux articulations à la cardan, le prix de revient de l'ensemble du dispositif était relativement élevé.

La présente invention vise à remédier à ces inconvénients en procurant un dispositif d'accouplement de conception particulièrement simple et bon marché à fabriquer.

A cet effet ce dispositif d'accouplement pour relier deux cycles en tandem au moyen d'une barre d'accouplement est caractérisé en ce que la barre d'accouplement est réalisée en une matière élastique lui permettant d'être déformée en flexion et son extrémité avant est encastrée fermement à l'arrière du cycle avant.

La barre d'accouplement est avantageusement réalisée en matière plastique, par exemple en polypropylène.

Suivant une caractéristique complémentaire de l'invention, la barre d'accouplement est solidaire, à chacune de ses deux extrémités, de deux pattes longitudinales parallèles formant crochets et destinées à s'engager sur des organes d'ancrage présentant des ergots transversaux coaxiaux.

Le dispositif d'accouplement suivant l'invention offre l'avantage d'être d'une conception particulièrement simple puisque son élément constitutif principal est un simple jonc de matière plastique. Son prix de revient est également très bas. En cours d'utilisation, il permet au cycle arrière, c'est-à-dire celui qui est attelé, de se décaler latéralement par rapport au cycle avant ou menant, d'une manière particulièrement souple, sans à-coups, rendant ainsi la conduite agréable.

Le fait que la barre d'accouplement soit simplement accrochée à des ergots permet de mettre en place très aisément la barre si l'on désire rouler en tandem, et également de la retirer aussi facilement, lorsque chaque conducteur désire reprendre son autonomie. En cas de chute du cycle arrière, la barre peut se décrocher très facilement, ce qui n'entraîne aucune conséquence sur le cycle avant. L'utilisation d'une barre élastique décrochable permet donc d'obtenir une très grande sécurité.

On décrira ci-après, à titre d'exemples non limitatifs, diverses formes de réalisation de la présente invention en référence au dessin annexé sur lequel :

La figure 1 est une vue en élévation schématique d'un dispositif d'accouplement à barre élastique s'étendant entre deux cycles avant et arrière.

La figure 2 est une vue en coupe longitudinale et horizontale, à plus grande échelle, du dispositif d'accrochage de l'extrémité antérieure de la barre.

La figure 3 est une vue en élévation, à plus grande échelle, du dispositif d'accrochage de l'extrémité antérieure de la barre.

La figure 4 est une vue en élévation de l'organe d'ancrage prévu sur le cycle arrière.

0069610

La figure 5 est une vue en coupe transversale faite suivant la ligne V-V de la figure 4.

La figure 6 est une vue en plan schématique illustrant la déformation en flexion de la barre d'accouplement.

La figure 7 est une vue en coupe verticale d'une variante d'exécution de l'organe d'ancrage prévu sur le cycle arrière.

Les figures 8, 9 et 10 sont des schémas illustrant le fonctionnement du dispositif d'accrochage utilisant l'organe d'ancrage de la figure 7.

Les figures 11, 12, 13 et 14 sont des vues en coupe verticale d'autres variantes d'exécution du dispositif d'accrochage de l'extrémité postérieure de la barre d'accouplement sur le cycle arrière.

La figure 15 est une vue en coupe horizontale d'une variante d'exécution du dispositif d'accrochage de la barre d'accouplement sur le cycle avant.

La figure 16 est une vue en coupe faite suivant la ligne XVI-XVI de la figure 15.

La figure 17 est une vue en élévation du dispositif d'accrochage de la figure 15.

La figure 18 est une vue en coupe horizontale d'une variante d'exécution du dispositif d'accrochage de la barre d'accouplement sur le cycle avant.

La figure 19 est une vue en coupe transversale du dispositif de la figure 18.

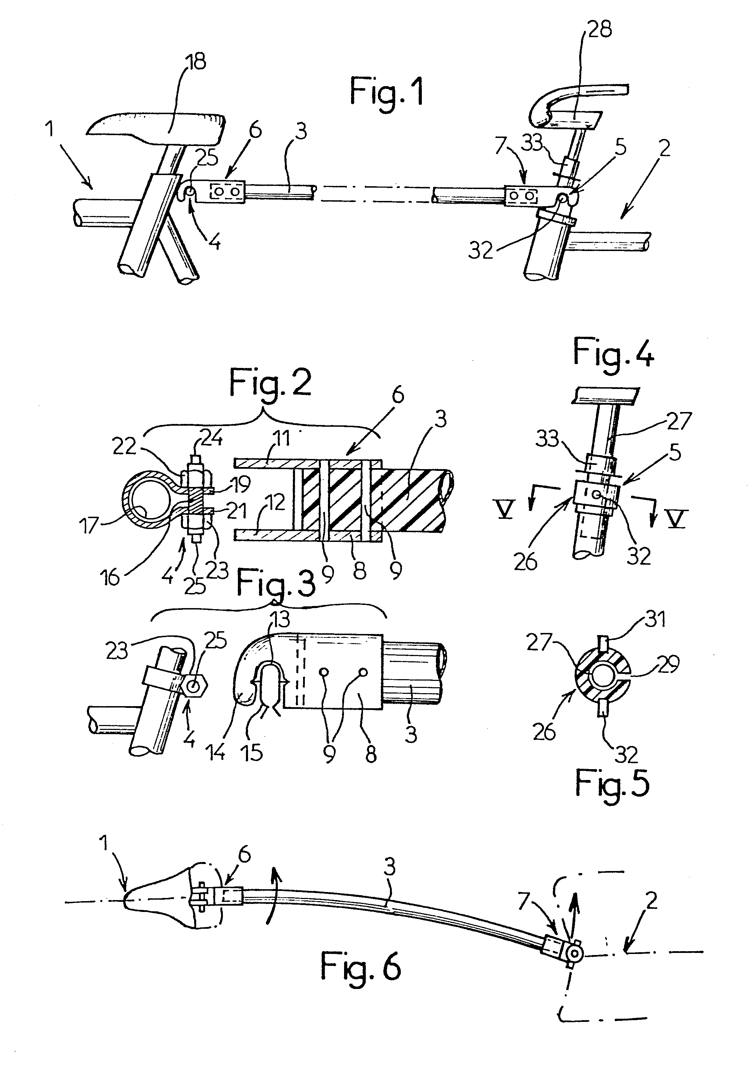

Le dispositif d'accouplement représenté sur la figure 1 est destiné à relier en tandem deux cycles, à savoir un cycle avant 1 dont seule la partie postérieure et supérieure, où se trouve la selle 18, est représentée, et un cycle arrière 2 dont seule la partie supérieure et antérieure, où se trouve le guidon 28, est représentée.

Le dispositif d'acouplement comporte essentiellement une barre d'accouplement 3 qui est réalisée en matière élastique lui permettant d'être déformée en flexion. Cette barre d'accouplement 3 est avantageusement constituée par un jonc en matière plastique, par exemple en polypropylène. Cette barre est de préférence pleine, comme il est représenté sur le dessin, mais elle pourrait être également tubulaire, à condition d'avoir une épaisseur de paroi suffisante. Elle peut être également armée d'éléments de renfort longitudinaux.

La section droite de la barre 3 est quelconque et de préférence circulaire comme dans l'exemple représenté.

La barre d'accouplement 3 est reliée, à ses extrémités, à des organes d'ancrage, à savoir un organe d'ancrage 4 monté sur le cycle avant 1 et un organe d'ancrage 5 monté sur le cycle arrière 2. La barre 3 est pourvue, à ses deux extrémités, d'éléments de liaison 6 et 7 identiques assurant respectivement la jonction avec les organes d'ancrage 4 et 5.

Comme les éléments de liaison 6 et 7 sont identiques, on décrira en détail seulement l'un d'entre eux, à savoir l'élément de liaison 6 se trouvant être relié à l'organe d'ancrage postérieur 4 porté par le cycle avant 1. Cet élément de liaison 6 comporte un manchon 8 entourant la partie extrême de la barre 3 et fixé à cette dernière au moyen de vis, boulons ou autres éléments transversaux 9 traversant des trous percés dans le manchon 8 et des trous transversaux dans la barre 3. Le manchon 8 est prolongé, au-delà de l'extrémité de la barre 3, par deux pattes longitudinales parallèles 11 et 12 qui présentent, dans leurs bords inférieurs, des encoches 13 délimitant ainsi des parties extrêmes en forme de crochets 14. Dans chacune des encoches 13 est logé de préférence un clips 15 assurant un verrouillage élastique.

L'organe d'ancrage 4 est constitué par la tige filetée 16 qui sert au blocage du tube 17 de la selle 18 du cycle avant 1. Cette tige filetée traverse deux pattes 19 et 21 parallèles prolongeant le collier de serrage du tube 17 et sur cette tige sont vissés des écrous 22 et 23 assurant le serrage des pattes 19 et 21. A ses deux extrémités, la tige filetée 16 présente respectivement des ergots coaxiaux 24, 25 s'étendant transversalement par rapport aux pattes 11, 12, ces ergots étant destinés à s'engager dans les encoches 13 pourvues des clips 15, lorsque la barre 3 est en place comme on peut le voir sur la figure 1.

On voit d'après ce qui précéde que la mise en place de cette barre s'effectue très aisément puisqu'il suffit d'amener les pattes 11, 12 au-dessus des ergots 24, 25 et d'abaisser ensuite les pattes pour que les ergots viennent se loger dans les clips 15, assurant ainsi un verrouillage élastique de l'extrtémité avant de la barre 3.

L'organe d'ancrage 5 prévu sur le cycle arrière 2 (figures 4 et 5) comporte un collier 26, de préférence en matière plastique, lequel est enfilé à rotation libre sur le tube 27 du guidon 28. Ce collier est de préférence fendu en 29 et il porte deux ergots 31 et 32 diamétralement opposés. Au-dessus du collier mobile 26 est disposée une bague d'arrêt 33 qui est emboîtée à force sur le tube 27 du guidon, pour limiter le débattement du collier 26 vers le haut. L'élément de liaison 7 situé à l'extrémité arrière de la barre 3 vient s'engager et se verrouiller élastiquement, par ses pattes 11,12, sur les deux ergots 31, 32, de la même façon que l'élément de liaison antérieur 6 sur les ergots 24, 25.

La figure 6 illustre la déformation élastique de la barre 3 lorsque le cycle arrière 2 se décale latéralement par raport au cycle avant 1. On voit que cette déformation crée un couple de rappel dont l'amplitude augmente avec la valeur du décalage latéral, ce qui tend à ramener le cycle arrière 2 dans l'axe du cycle avant 1, et ce, sans à-coup.

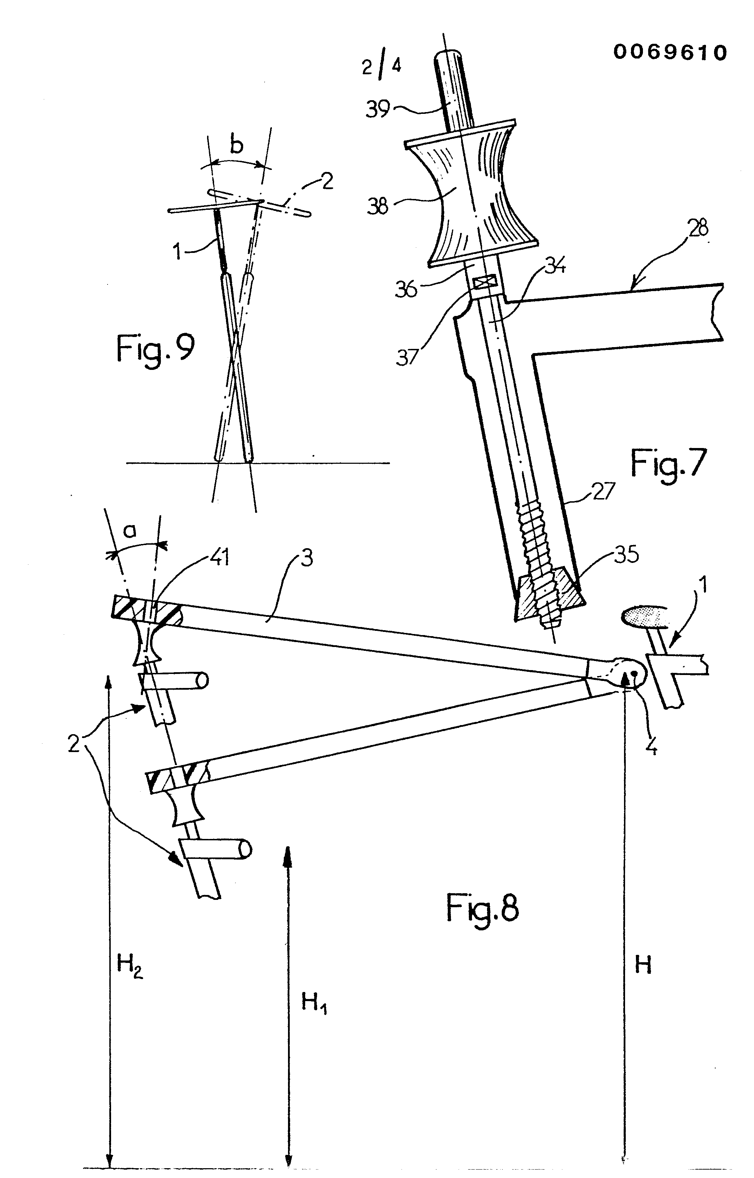

On décrira maintenant, en se référant aux figures 7 à 10, une variante d'exécution du dispositif d'accrochage de la barre 3 avec le cycle arrière 2. Dans ce cas la vis d'origine utilisée pour le serrage du guidon 28 est remplacée par un ensemble comprenant une tige 34 engagée dans le tube 27 du guidon 28 et présentant, dans sa partie extrème inférieure, un filetage sur lequel est vissé un cône de serrage 35 emboîté dans l'extrémité inférieure du tube 27. Cette tige 34 sort à l'extérieur, à sa partie supérieure, et elle est prolongée par un collet 36 de plus grand diamètre sur lequel est formé un méplat 37 permettant la prise d'une clef pour assurer le serrage. Au-dessus du collet 36 se trouve fixé un organe élastique 38, par exemple en caoutchouc, ayant avantageusement la forme d'un hyperboloïde de révolution. Au-dessus de l'organe élastique 38 se trouve un ergot coaxial 39 s'étendant vers le haut. De son côté la barre 3 est percée, près de son extrémité, d'un trou diamétral 41 dans lequel s'engage l'ergot 39 lorsque les deux cycles 1 et 2 sont attelés.

Comme on peut le voir sur la figure 8 l'accouplement élastique qui vient d'être décrit permet d'atteler au cycle avant 1 dont l'organe d'ancrage postérieur 4 est à une hauteur H par rapport au sol, des cycles arrière 2 de hauteurs différentes H1 et H2, grâce à la variation de l'angle a entre l'axe de la tige 34 et l'axe de l'ergot 39, variation qui est rendue possible par l'élasticité du matériau constituant l'organe de liaison 38.

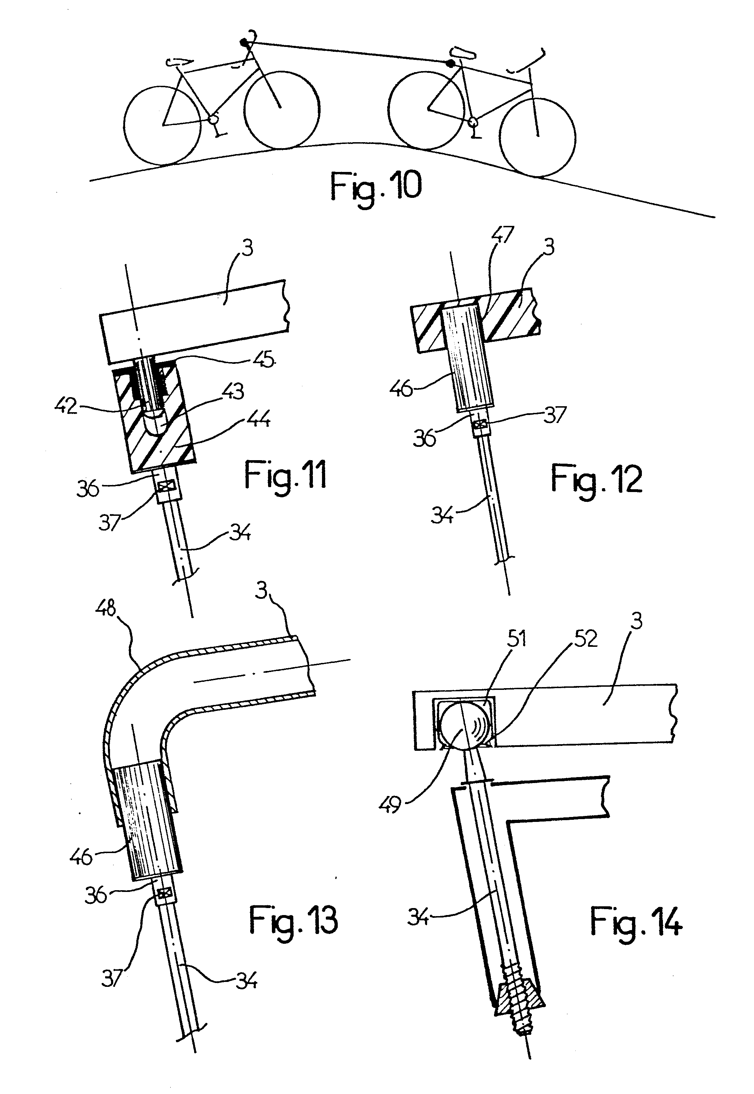

Cet accouplement élastique permet également d'absorber, dans un plan horizontal, les variations de vitesse du cycle avant 1 et du cycle arrière 2. Il permet également d'absorber les variations de l'angle b entre les plans des cycles avant 1 et arrière 2, comme il est illustré sur la figure 9. La figure 10 illustre la variation de l'angle a par suite d'un changement de pente de la route.

Dans la variante d'exécution illustrée sur la figure 11 la barre 3 est solidaire, près de son extrémité postérieure, d'un ergot transversal 42 qui pénètre dans un logement 43 prévu axialement dans un organe de liaison élastique 44 solidaire du collet supérieur 36 de la tige 34. Cet organe élastique 44 a une forme cylindrique et il porte, sur sa face supérieure, une bague d'arrêt 45 traversée par l'ergot 42 et entourant l'orifice du logement axial 43 débouchant dans la face supérieure de l'organe élastique 44.

Dans la variante d'exécution illustrée sur la figure 12 le collet 36 de la tige 34 est prolongé vers le haut par un organe de liaison élastique et cylindrique 46 qui est engagé dans un trou borgne 47 percé transversalement dans la partie extrême postérieure de la barre 3.

Dans la variante d'exécution illustrée sur la figure 13 la barre d'accouplement 3 se prolonge, à sa partie postérieure, par un coude femelle tubulaire 48 coiffant l'organe élastique 46 solidaire de la tige 34.

Dans tous ces dispositifs de liaison le méplat 37 est prévu sur le collet 36 solidaire de la tige 34 pour permettre la prise d'une clef pour le serrage. Par ailleurs la pénétration dans ou sur les liaisons élastiques se fait avec le serrage nécessaire qui utilise l'élasticité propre du matériau constituant l'organe de liaison élastique 44 ou 46, afin d'assurer la tenue de la barre d'accouplement 3 dans un plan vertical.

Dans la variante d'exécution illustrée sur la figure 14 la tige 34 se termine, à son extrémité supérieure, par une sphère 49 qui vient se loger dans un évidement 51 prévu dans la partie extrême de la barre 3. La sphère 49 est retenue dans l'évidement 51 au moyen d'un clips 52.

Tous les dispositifs d'accrochage représentés sur les figures 7 à 14 permettent d'augmenter la sécurité du fait qu'ils assurent, dans le cas de chute de l'un des deux cycles, le désaccouplement automatique de ceux-ci.

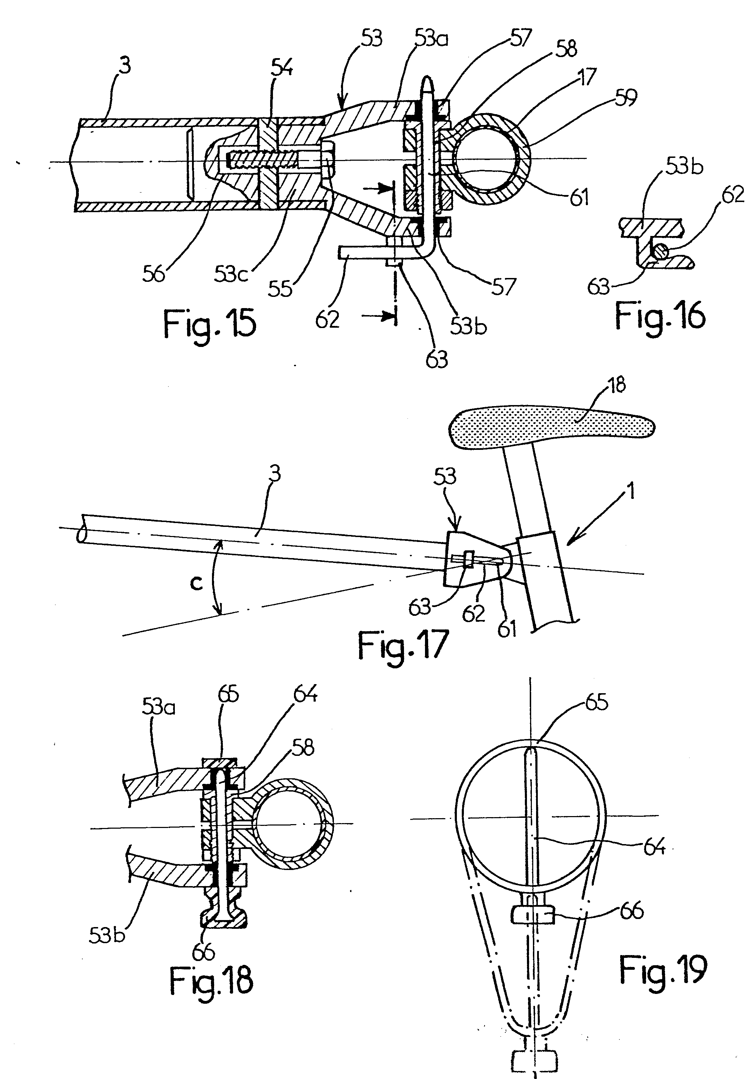

On décrira maintenant, en se référant aux figures 15 à 17, une variante d'exécution du dispositif d'accrochage de la barre 3 sur le cycle avant 1. Dans cette variante la barre d'accouplement 3 est prolongée, à son extrémité antérieure, par une chape 53 qui comprend un noyau axial 53c engagé dans la partie extrême de la barre tubulaire 3 et qui est prolongée à l'extérieur, vers l'avant, par deux ailes parallèles latérales et verticales 53a et 53b. La liaison entre la chape 53 et la barre 3 est réalisée, par exemple, au moyen d'une goupille transversale 54 traversant un perçage diamétral du noyau 53c et deux trous diamétralement opposés percés dans la paroi de la barre tubulaire 3. Dans la partie centrale de la goupille transversale 54 est percé un trou taraudé d'axe longitudinal et dans lequel vient se visser la tige filetée d'une vis 55 qui est engagée dans un perçage axial 56 ménagé dans le noyau 53c et dont la tête prend appui sur la face frontale du noyau 53c dans laquelle débouche le perçage 56. Les deux ailes 53a, 53b sont percées respectivement de trous opposés transversalement dans lesquels sont logées des bagues 57. Les deux ailes latérales 53a, 53b sont disposées de part et d'autre d'une vis horizontale et transversale 58 assurant le serrage du tube du cadre 59 autour du tube 17 de la selle 18. La vis de serrage 58 est percée de part en part d'un trou axial dans lequel est engagée une goupille d'attelage 61 qui traverse également les deux bagues 57 portées par les deux ailes latérales 53a, 53b de la chape 53. Cette goupille 61 assure ainsi la liaison entre la chape 53 et le cycle avant 1, tout en permettant un débattement angulaire de la barre 3 autour de l'axe horizontal et transversal défini par la goupille 61.

La goupille d'attelage 61 est prolongée, à l'une de ses extrémités, par un bras à l'équerre 62 qui vient se clipser dans une patte 63 issue de l'aile 53b de la chape 53 et s'étendant vers l'extérieur. Ceci permet à la goupille d'attelage 61 de rester en place pendant l'utilisation de la barre d'accouplement 3.

L'attelage qui a été décrit ci-dessus en référence aux figures 15 à 17 assure un encastrement rigide par rapport au cycle avant 1, dans un plan horizontal, tout en permettant un débattement angulaire d'un angle c dans un plan vertical, autour de l'axe de la goupille 61, comme il est illustré sur la figure 17. Le débattement angulaire suivant l'angle c permet au cycle avant 1 de hauteur H (figure 8) de pouvoir s'accoupler à des cycles arrière 2 de hauteurs différentes H1 et H2 par exemple. Ceci permet également aux deux cycles 1 et 2 de passer sur un terrain présentant des pentes différentes pour le cycle avant 1 et le cycle arrière 2, comme il est illustré sur la figure 10.

Ls figures 18 et 19 illustrent une variante d'exécution du dispositif d'accrochage de la barre 3 sur le cycle avant 1. Dans ce cas la goupille 64 qui est destinée à être engagée axialement à travers les bagues 57 et la vis de serrage 58, est surmoulée dans un bracelet élastique 65 entourant les ailes 53a et 53b de la chape 53 et pourvu d'une tête de préhension 66 en saillie vers l'extérieur. La goupille 64 s'étend diamétralement et l'une de ses extrémités est maintenue prisonnière dans la tête de préhension externe 66. Pour désaccoupler la barre d'attelage 3 du cycle avant 1, l'utilisateur n'a qu'à tirer radialement sur le bracelet 65 par la tête de préhension 66. Le bracelet 65 s'allonge alors, comme il est représenté en trait mixte sur la figure 19 ,et la goupille 64 se trouve alors dégagée totalement de la vis 58 et de la chape 53. Ce dispositif assure, en cours d'utilisation, le maintien en place de la goupille 64 et elle la rend partie intégrante de l'ensemble d'attelage du cycle avant 1 et par conséquent imperdable.

REVENDICATIONS

1- Dispositif d'accouplement pour relier deux cycles (1,2) en tandem au moyen d'une barre d'accouplement (3) caractérisé en ce que la barre d'accouplement (3) est réalisée en une matière élastique lui permettant d'être déformée en flexion et son extrémité avant est encastrée fermement à l'arrière du cycle avant (1).

2- Dispositif suivant la revendication1, caractérisé en ce que la barre d'accouplement (3) est en matière plastique, par exemple en polypropylène.

3.- Dispositif suivant l'une quelconque des revendications 1 et 2, caractérisé en ce que la barre d'accouplement (3), pleine ou creuse, a une section droite circulaire.

4. - Dispositif suivant l'une quelconque des revendications 1 à 3, caractérisé en ce que le dispositif d'accrochage de la barre d'accouplement (3) sur le cycle arrière (2) comprend une tige (34) engagée dans le tube (27 du guidon (28) et présentant, dans sa partie extrême inférieure, un filetage sur lequel est vissé un cône de serrage (35) emboîté dans l'extrémité inférieure du tube (27), cette tige (34) sortant à l'extérieur, à sa partie supérieure, et étant prolongé par un collet (36) de plus grand diamètre sur lequel est formé un méplat (37) permettant la prise d'une clef pour assurer le serrage, un organe (38, 44, 46, 49) de liaison avec la barre (3) étant solidaire du collet (36), au-dessus de celui-ci.

5.- Dispositif suivant la revendication 4, caractérisé en ce que l'organe de liaison (38, 44, 46) est en une matière élastique.

6.- Dispositif suivant la revendication 5, caractérisé en ce que l'organe de liaison (38) a la forme d'un hyperboloïde de révolution et il est prolongé vers le haut par un ergot coaxial (39) s'engageant dans un trou diamétral (41) percé dans la barre d'accouplement (3) lorsque les deux cycles (1,2) sont attelés.

7.- Dispositif suivant la revendication 5, caractérisé en ce que l'organe de liaison élastique (44) a une forme cylindrique et porte, sur sa face supérieure, une bague d'arrêt (45) entourant l'orifice d'un logement axial (43) débouchant dans la face supérieure de l'organe élastique (44), logement dans lequel pénètre un ergot transversal (42) solidaire de la barre d'accouplement (3).

8.- Dispositif suivant la revendication 5, caractérisé en ce que l'organe de liaison élastique et cylindrique (46) est engagé dans un trou borgne (47) percé transversalement dans la partie extrême postérieure de la barre d'accouplement (3).

9.- Dispositif suivant la revendication 5, caractérisé en ce que l'organe élastique (46) est engagé dans un coude femelle tubulaire (48) prolongeant la partie postérieure de la barre d'accouplement (3).

10.- Dispositif suivant la revendication 4, caractérisé en ce que l'organe de liaison (49) est constitué par une sphère logée dans un évidement (51) prévu dans la partie extrême de la barre d'accouplement (3) et retenu dans cet évidement (51) au moyen d'un clips (52).

11.- Dispositif suivant l'une quelconque des revendications précédentes, caractérisé en ce que la barre d'accouplement (3) est prolongée, à son extrémité antérieure, par une chape (53) comprenant deux ailes parallèles latérales et verticales (53a,53b) articulées sur le cycle avant (1) autour d'un axe horizontal et transversal (61).

12.- Dispositif suivant la revendication 11, caractérisé en ce que la chape (53) comprend un noyau axial (53c) engagé dans la partie extrême de la barre d'accouplement tubulaire (3) et une goupille transversale (54) traverse un perçage diamétral du noyau (53c) et deux trous diamétralement opposés percés dans la paroi de la barre tubulaire (3), cette goupille transversale (54) étant percée, dans sa partie centrale, d'un trou taraudé d'axe longitudinal dans lequel vient se visser la tige filetée d'une vis (55) enga-

gée dans un perçage axial (56) ménagé dans le noyau (53c) et dont la tête prend appui sur la face frontale du noyau (53c) dans laquelle débouche le perçage (56).

13.- Dispositif suivant l'une quelconque des revendications 11 et 12, caractérisé en ce que les deux ailes latérales et verticales (53a,53b) de la chape (53) sont percées respectivement de trous opposés transversalement dans lesquels sont logées des bagues (57) et elles sont disposées de part et d'autre d'une vis horizontale et transversale (58) assurant le serrage du tube du cadre (59) autour du tube (17) de la selle (18), cette vis de serrage (58) étant percée de part en part d'un trou axial dans lequel est engagée une goupille d'attelage (61) définissant l'axe horizontal et transversal d'articulation de la chape (53), cette goupille d'attelage (61) traversant les deux bagues (57) portées par les deux ailes latérales (53a, 53b) de la chape (53).

14.- Dispositif suivant la revendication 13, caractérisé en ce que la goupille d'attelage (61) est prolongée, à l'une de ses extrémités, par un bras à l'équerre (62) venant se clipser dans une patte (63) issue d'une aile (53b) de la chape (53) et s'étendant vers l'extérieur.

15.-Dispositif suivant la revendication 13, caractérisé en ce que la goupille d'atelage (64) est surmoulée dans un bracelet élastique (65) entourant les ailes (53a, 53b) de la chape (53) et pourvu d'une tête de préhension (66) en saillie vers l'extérieur, la goupille (64) s'étendant diamétralement et l'une de ses extrémités étant maintenue prisonnière dans la tête de préhension externe (66).

16.- Dispositif suivant l'une quelconque des revendications 1 à 3, caractérisé en ce que l'extrémité arrière (7) de la barre d'accouplement (3) est articulée autour du tube (27) du guidon (28) du cycle arrière (2).

17.- Dispositif suivant l'une quelconque des revendications 1 à 3, caractérisé en ce qu'à chacune de ses extrémités la barre d'accouplement (3) est solidaire de deux pattes longitudinales parallèles (11, 12) qui présentent, dans leurs bords inférieurs, des encoches (13) délimitant

0069610

des parties extrêmes en forme de crochets (14) destinés à s'engager sur des organes d'ancrage (4, 5) présentant des ergots transversaux coaxiaux (24, 25; 31, 32).

18.- Dispositif suivant la revendication 17, caractérisé en ce que chaque encoche (13) des pattes longitudinales (11, 12) délimitant un crochet (14) forme ou contient un clips (15) assurant un verrouillage élastique.

19.- Dispositif suivant l'une quelconque des revendications 17 et 18, caractérisé en ce que les deux pattes (11, 12) sont issues d'un manchon (8) dans lequel s'engage et est fixée la partie extrême de la barre d'accouplement (3).

20.- Dispositif suivant l'une quelconque des revendications 17 à 19, caractérisé en ce que l'organe d'ancrage prévu à l'arrière du cycle avant (1) comporte deux ergots (24, 25) constitués par les deux parties extrêmes opposées d'une tige filetée (16) traversant des pattes (19, 21) de serrage du tube (17) de la selle (18) et sur laquelle sont vissés des écrous (22,23) de blocage de cette selle.

21.- Dispositif suivant l'une quelconque des revendications 17 à 20, caractérisé en ce que l'organe d'ancrage (5) prévu à l'avant du cycle arrière (2) comprend deux ergots (31, 32) diamétralement opposés sur un collier (26) enfilé à rotation libre sur le tube (27) du guidon, ce collier (26) étant interrompu par une fente (29), et en ce qu'une bague d'arrêt (33) est emboîtée à force sur le tube (27) du guidon (28), au-dessus du collier mobile (26), pour limiter la course de ce collier vers le haut.

Fig. 1

Fig. 2

Fig. 3

Fig. 4

Fig. 5

Fig. 6

39

38

36

37

34

28

Fig.7

27

35

Fig.9

b

2

1

a

41

3

1

2

4

H₂

H₁

H

Fig.8

Fig.10

Fig.11

Fig.12

Fig.13

Fig.14

0069610

Fig. 15

Fig. 16

Fig. 17

Fig. 18

Fig. 19

Office européen
des brevets

**RAPPORT DE RECHERCHE EUROPEENNE**

EP  82 40 1048

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | EP-A-0 008 982  (BUSSEUIL)<br>* figure 1;  page 4, ligne 34 - page 5,ligne 3 * & FR - A - 2 434 746 (Cat.D) | 1,3 | B 62 K  27/00 |
| A | FR-A- 886 619  (DUPIN)<br>* en entier; figure 5 * | 1,4 | |
| A | US-A-1 375 459  (HESSE)<br>* figure 1; page 1, lignes 49-52 * | 4 | |
| A | US-A-4 114 919  (STOWE)<br>* figure 5; colonne 5, ligne 61 - colonne 6, ligne 26 * | 4 | |

-----

| | DOMAINES TECHNIQUES RECHERCHES (Int. Cl. ³) |
|---|---|
| | B 62 K |

Le présent rapport de recherche a été établi pour toutes les revendications

| Lieu de la recherche | Date d'achèvement de la recherche | Examinateur |
|---|---|---|
| LA HAYE | 10-09-1982 | GEMMELL R.I.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82